# EUROPEAN PATENT SPECIFICATION

(11) **EP 2 278 687 B1**
(45) Date of publication and mention of the grant of the patent: **17.01.2018**
(21) Application number: 09425295.4
(22) Date of filing: 22.07.2009
(51) Int. Cl.: H02J 9/06

(54) **Electrical apparatus having a solar power supply**
Elektrisches Gerät mit einer Solarstromversorgung
Appareil électrique avec une source d'alimentation solaire

(43) Date of publication of application: 26.01.2011
(73) Proprietor: Candy S.p.A., 20052 Monza (MI) (IT)
(72) Inventor: Fumagalli, Silvano, 20052 Monza (MI) (IT)
(74) Representative: Perani & Partners S.p.A.

(56) References cited:
- EP-A- 0 622 883
- WO-A-2008/074195
- GB-A- 2 270 053

## Description

The present invention relates to a novel electrical apparatus, particularly an electrical household appliance, having a solar power supply for reducing power absorption when the apparatus is on standby.

A well-known issue in the art is to reduce power consumption of electrical or electronic appliances, particularly in standby mode. An appliance, such as an electrical household appliance (e.g. an oven, a dishwasher, a washing machine) is in standby mode when it does not perform its primary function, although it is still powered, for instance for operating mode setting or safety reasons.

In view of reducing power absorption on standby, the provision of electrical apparatus power supply systems including a solar power supply has been envisaged in the art. One example of this prior art is disclosed in EP 1 513 240.

EP 0 622 883 describes an externally controllable switching power supply device suitable for a fac-simile apparatus having a stand-by state. The power supply device comprises a main power supply for supplying electric power to respective units of a communication apparatus main body; main power supply control means for ON/OFF controlling said main power supply; and a battery for supplying electric power to said main power supply control means, wherein when said main power supply is ON, said main power supply control means receives power supply from said main power supply, and when main power supply is OFF, said main power supply control means receives power supply from the battery. The battery comprises a secondary battery and a solar cell.

WO 2008/074195 relates to a power supply device using light energy is composed of an energy picking-up part, an energy buffering part and a power conversion part. The picking-up part includes two assemblies, each having a diode e being connected in parallel.

From EP 1 513 240 it is known to supply power to an electrical or electronic apparatus either via a traditional connection to a power-distribution network or through a solar power source. The two power sources are connected to the electronics to be powered through respective switches. A special control circuit is provided to control the switches, which circuit is adapted to monitor the voltage developed by the solar power source and to connect such source to the load when voltage exceeds a predetermined value. When voltage is insufficient, the solar source is disconnected from the electronics to be powered and the traditional mains power is connected instead. Therefore, the two sources are alternately connected to the load.

This prior art system involved a complex and expensive structure. It actually required a large number of components, such as the switches between the power sources and the load. A suitable switch control circuit, as well as means for monitoring the voltage generated by the solar source were also needed.

Moreover, the apparatus also included a battery for storing the power supplied by the solar source.

In view of the above prior art, the object of the present invention is to provide an electrical apparatus that affords minimized mains power absorption, particularly in standby mode, while maintaining a simple, inexpensive and reliably operating structure.

According to the present invention, this object is fulfilled by an electrical apparatus according to independent claim 1. The characteristics and advantages of the present invention will appear from the following detailed description of one practical embodiment, which is illustrated without limitation in the annexed drawings, in which:
- Figure 1 is a diagrammatic view of the components that form an electrical apparatus of the invention;
- Figure 2 shows a wiring diagram of the power circuit for electronics of the apparatus and the solar power supply.

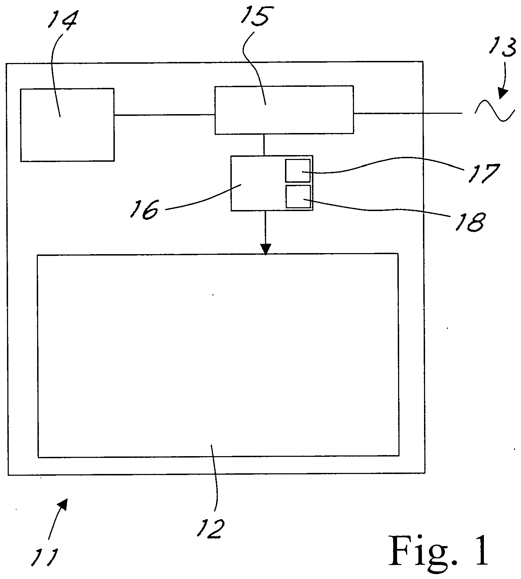

Figure 1 shows an electrical apparatus 11, particularly an electrical household appliance (such as an oven, a washing machine, a dish washer, etc).

The appliance comprises operating elements 12 designed to perform a primary function of the apparatus. These operating elements may be of various types, such as a heating resistor in the case of an oven or other electric loads (motors, electric actuators, etc.) for other types of appliances.

The appliance 11 incorporates control electronics 16. Such electronics advantageously comprises a user interface, which may include, for instance, a display screen 17 and/or a keyboard 18 for apparatus programming data input.

The electronics 16 is designed to control the operating elements 12 of the appliance, e.g. by actuating operating element controlling switches.

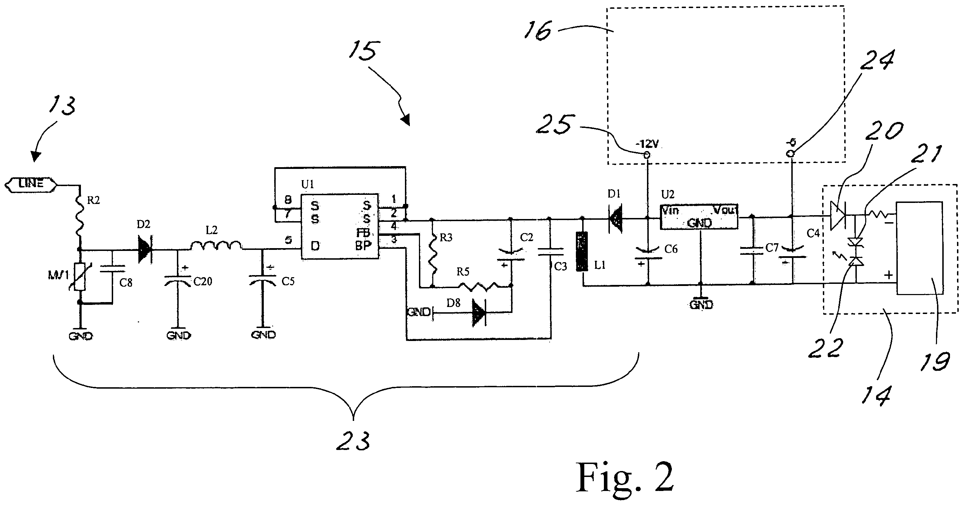

The appliance 11 comprises a power circuit 15 which is connected in operation between the power-distribution network 13 and the electronics 16, as clearly shown in Figure 2.

In one embodiment of the invention, the power circuit 15 has two output terminals, at -5V and -12V respectively.

The -12V line powers the switching elements of the apparatus 11 (relays and other switches). The -5V powers the logic part of the electronics 16. In standby operation, i.e. the operation in which the apparatus does not perform its primary function (for instance, in an oven, the function of heating the oven cavity), the -12V part is idle as the operating elements 12 of the apparatus are idle. Thus, the -12V line does not take part in standby consumption.

However, the -5V powers the logic part of the electronics 16 in standby mode. The supervision unit of the appliance (e.g. an oven) may be required to be always energized both for safety reasons, and to allow appliance programming through the interface 17, 18 of the electronics 16.

The -5V terminal 24 depends on an electrolytic capacitor C4, which is used for power storage and voltage stabilization. The capacitor C4 is connected between the earth and the terminal 24, at the output "V out" of the integrated circuit U2. The integrated circuit U2 consists of a linear stabilizer constructed according to prior art techniques. A capacitor C7 is placed in parallel with the capacitor C4.

The electrolytic capacitor C6 is connected to the input terminal "V in" of the integrated circuit U2 and to the earth at the opposite terminal The terminal "V in" is connected to the -12V output terminal of the power circuit.

The switching power supply 23 is connected upstream from the capacitor C6 and downstream from the power-distribution network 13. Switching power supplies are known in the art and comprise a rectifier stage and, downstream from the rectifier stage, controlled switching means to keep a predetermined stabilized voltage at an output terminal of the power supply, advantageously at the ends of a capacitor.

In the preferred embodiment of the invention, the switching power supply includes a single half-wave rectifier circuit comprising the diode D2, with the electrolytic capacitor C20 and the inductor L2 connected downstream therefrom to charge the electrolytic capacitor C5.

The capacitor C5 is connected between the earth and the terminal 5, of the integrated circuit U1.

The integrated circuit U1, which is constructed according to prior art techniques, comprises the switching means (e.g. transistors) of the switching power supply 23, controlled to obtain a stabilized voltage downstream from the switching power supply.

The electrolytic capacitor C2 is connected to the terminal 2 of the integrated circuit U1, and to earth at the opposite terminal, via the diode D8. The resistor R3 is connected between the terminals 2 and 4 of the integrated circuit U1. The resistor R5 is connected between the positive pole of the capacitor C2 and the terminal 4 of the integrated circuit U1.

The solar power supply is connected, in parallel with the capacitor C4, between the earth and the -5V terminal of the power circuit.

The solar power supply 14 comprises a solar power source 19, advantageously in the form of a photovoltaic solar panel. The solar power source is constantly connected to the electronics to be powered, particularly to the -5V line, via a closed electric circuit having no switches, i.e. no elements controlled to open or close the electric circuit.

The solar source 19 has at its ends a circuit branch including a forward-biased LED 22 and a reverse-biased Zener diode 21.

A diode 20 is connected to an output branch of the solar power supply 14 connected to the terminal 24, whose bias prevents current flow when the solar power source 19 is idle and does not generate sufficient voltage to supply a voltage exceeding 5V to the ends of the solar power supply.

The positive terminal of the source 19 is connected to earth.

The operation of the above circuit will be now described.

The charging voltage for C4, having the terminal 24 connected thereto, is supplied by the integrated circuit U2, which acts as a linear voltage regulator. The integrated circuit U1 draws -12V voltage from the electrolytic capacitor C6 and supplies it at -5V to the ends of the capacitor C4.

The switching power supply 23, connected between the power-distribution network 13 and the -12V output voltage 25 maintains a charge and a desired voltage on the capacitor C6.

In operation, the switching power supply 23 draws energy from the capacitor C5 for packet transfer thereof to the downstream capacitor C2, which is in turn connected to the capacitor C6.

The capacitor C5, which is connected upstream from the integrated circuit U1 is supplied with mains voltage by the single half-wave rectifier provided by the diode D2.

The switching power supply 23 comprises feedback control means, which monitor a voltage downstream from the switching means (here included in the integrated circuit U1) to compare it with a reference voltage, to control switching of the switching means and stabilize the output voltage of the power supply. In the preferred embodiment, the integrated circuit U1 monitors voltage at the ends of C2 through a feedback line consisting of the resistive divider R3-R5. When voltage at the ends of C2 drops below a preset value, the integrated circuit U2 drops an energy packet from C5 and transfers it to C2 by appropriately controlling its switching elements and repeating this step until the C2 voltage reaches the desired value.

If the voltage supplied by the source 19 is sufficient, suitably higher than 5V, the solar power supply 14 supplies power to the electronics 16. In standby operation, the switching integrated circuit U1 finds that the capacitor C6 is charged and deviates no other energy packet from C5 to C6. Thus, the capacitor C5 remains in its charged state and does not draw power from the mains 13. Standby power consumption may be reduced, for instance, by 70%. The remaining 30% is consumed, which is required for operation of the passive network of U1.

When the solar power supply 14 operates for powering the electronics 16, the voltage supplied by the source 19 is sufficient to circulate current in the Zener diode 21, and turns the LED 22 on. The user will be informed that standby operation is supplied with solar energy.

In case of insufficient illumination of the photovoltaic panel 19, the electronics 16 will be powered by the mains 13, and the current will not flow through the solar power supply 14 due to the presence of the diode 20.

This clearly shows that the objects of the present invention have been fulfilled.

The apparatus of the invention affords considerable power savings, particularly in standby operation, in spite of its simple and inexpensive structure, with a small number of electronic components.

Particularly, no switch is introduced in the circuit that connects the solar power source 19 to the electronics 16 to be powered.

This dramatically reduces the complexity of the power circuit of the apparatus, because no circuit is required for controlling the solar power supply switches. Also, no means will be required for monitoring the voltage generated by the photovoltaic source, unlike the prior art.

Furthermore, due to the presence of a switching power supply, no special switch is required to switch off mains power supply. Hence, no control circuit is required for controlling the actuation of the switch that cuts off mains power. The switching power supply regulates power absorption as a function of the power required by the mains downstream from it.

The combination of a switching power supply (connected between the mains and the power terminal for the electronics) with a solar power supply (connected between the earth and the power terminal for the electronics) is particularly advantageous because it utilizes the natural self-regulating feature of the switching power supply to reduce mains power absorption when the solar source is adequately illuminated.

The apparatus also requires no energy storage batteries, unlike the prior art.

Furthermore, due to the presence of the LED 22, directly connected to the ends of the solar source in series with the Zener diode, the user may be reliably and reassuringly informed of the power saving condition, without any particularly complex circuit arrangement.

The presence of the diode 20 also avoids current recirculation into the solar panel 19 using a simple and inexpensive circuit configuration.

Those skilled in the art will obviously appreciate that a number of changes and variants may be made to the arrangements as described hereinbefore to meet incidental and specific needs, without departure from the scope of the invention, as defined in the following claims.

## Claims

1. An electrical apparatus comprising electrically powered operating elements (12) designed to perform a primary function of the apparatus, an apparatus controlling electronics (16), a power circuit (15) for powering the electronics, connected between a power-distribution network (13) and the electronics (16), a solar power supply (14), wherein the solar power supply comprises a solar power source (19) which is connected to the electronics (16) of the apparatus, and
said power circuit (15) comprises a switching power supply (23) connected between the power-distribution network (13) and a power terminal (24) connected to the electronics (16),
**characterized in that** the solar power source is constantly connected to the electronics and in particular to the power terminal via a switchless electric circuit, in a configuration adapted for powering the electronics of the apparatus, and **in that** the switching power supply (23) comprises a rectifier stage and, downstream from the rectifier stage, switching means (U1) controlled to obtain a stabilized voltage downstream the switching power supply.

2. An electrical apparatus as claimed in claim 1, **characterized in that** the solar power supply (14) is connected between the earth and said power terminal (24) for the electronics.

3. An electrical apparatus as claimed in one or more of the preceding claims, **characterized in that** said power circuit (15) has at least two voltage outputs (24, 25), with a linear stabilizer (U2) being provided to reduce the voltage from a first output (25) to a second output (24) .

4. An electrical apparatus as claimed in one or more of the preceding claims, **characterized in that** the electronics (16) comprise user interface means (17, 18).

5. An electrical apparatus as claimed in one or more of the preceding claims, **characterized in that** it includes an indicator (22) for showing that the electronics is being powered by the solar power supply (14), said indicator comprising a LED (22) connected in series to a Zener diode (21) on a branch in parallel with the solar power source (19) of the solar power supply (14).

6. An electrical apparatus as claimed in one or more of the preceding claims, **characterized in that** the solar power supply (14) comprises a diode (20) connected to a terminal of the solar power supply (14) for preventing recirculation of current into the solar source (19) when the latter is idle due to inadequate illumination.

7. An electrical apparatus as claimed in one or more of the preceding claims, **characterized in that** the power circuit (15) comprises at least one capacitor (C4, C6) connected between the earth and a power terminal for the electronics.

8. An electrical apparatus as claimed in claim 1, wherein the switching power supply comprises feedback control means, which monitor a voltage downstream from the switching means to compare it with a reference voltage, to control switching of the switching means and stabilize the output voltage of the power supply.

## Patentansprüche

1. Elektrisches Gerät mit elektrisch betriebenen Bedienelementen (12) zur Ausführung einer Primärfunktion des Gerätes, einer Gerätesteuerelektronik (16), einem Stromkreis (15) zur Stromversorgung der Elektronik, die zwischen einem Stromverteilungsnetz (13) und der Elektronik (16) verbunden ist, einer Solarstromversorgung (14), wobei die Solarstromversorgung eine Solarstromquelle (19) umfasst, die mit der Elektronik (16) des Gerätes verbunden ist, und
der Stromkreis (15) eine Schalstromversorgung (23) umfasst, die zwischen dem Stromverteilungsnetz (13) und einen mit der Elektronik (16) verbundenen Stromanschluss (24) verbunden ist,
**dadurch gekennzeichnet, dass** die Solarstromquelle ständig mit der Elektronik und insbesondere mit dem Stromanschluss über einen schaltlosen Stromkreis in einer Konfiguration verbunden ist, die zum Speisen der Elektronik des Gerätes angepasst ist, und dass die Schaltstromversorgung (23) eine Gleichrichterstufe und stromabwärts von der Gleichrichterstufe Schaltmittel (U1) umfasst, die gesteuert werden, um eine stabilisierte Spannung stromabwärts der Schaltstromversorgung zu erhalten.

2. Elektrisches Gerät nach Anspruch 1, **dadurch gekennzeichnet, dass** die Solarstromversorgung (14) zwischen der Erde und dem Stromanschluss (24) für die Elektronik geschaltet ist.

3. Elektrisches Gerät nach einem oder mehreren der vorhergehenden Ansprüche, **dadurch gekennzeichnet, dass** der Stromkreis (15) mindestens zwei Spannungsausgänge (24, 25) aufweist, wobei ein linearer Stabilisator (U2) vorgesehen ist, um die Spannung von einem ersten Ausgang (25) zu einem zweiten Ausgang (24) zu reduzieren.

4. Elektrisches Gerät nach einem oder mehreren der vorhergehenden Ansprüche, **dadurch gekennzeichnet, dass** die Elektronik (16) Benutzerschnittstellenmittel (17, 18) umfasst.

5. Elektrisches Gerät nach einem oder mehreren der vorhergehenden Ansprüche, **dadurch gekennzeichnet, dass** es einen Indikator (22) aufweist, um anzuzeigen, dass die Elektronik von der Solarstromversorgung (14) gespeist wird, wobei der Indikator eine LED (22) umfasst, die in Reihe mit einer Zenerdiode (21) an einem Zweig parallel zur Solarstromquelle (19) der Solarstromversorgung (14) geschaltet ist.

6. Elektrisches Gerät nach einem oder mehreren der vorhergehenden Ansprüche, **dadurch gekennzeichnet, dass** die Solarstromversorgung (14) eine Diode (20) aufweist, die mit einem Anschluss der Solarstromversorgung (14) zur Verhinderung der Stromrückführung in die Solarquelle (19) verbunden ist, wenn diese wegen unzureichender Beleuchtung im Leerlauf ist.

7. Elektrisches Gerät nach einem oder mehreren der vorhergehenden Ansprüche, **dadurch gekennzeichnet, dass** der Stromkreis (15) mindestens einen Kondensator (C4, C6) umfasst, der zwischen der Erde und einem Stromanschluss für die Elektronik geschaltet ist.

8. Elektrisches Gerät nach Anspruch 1, wobei die Schaltstromversorgung Rückkopplungssteuermittel umfasst, die eine Spannung stromabwärts von den Schaltmitteln überwachen, um sie mit einer Referenzspannung zu vergleichen, um das Schalten der Schaltmittel zu steuern und die Ausgangsspannung der Stromversorgung zu stabilisieren.

## Revendications

1. Appareil électrique comprenant des éléments de commande électriques (12) conçus pour remplir une fonction principale de l'appareil, une électronique de commande de l'appareil (16), un circuit d'alimentation (15) pour alimenter l'électronique connecté entre un réseau de distribution d'énergie (13) et l'électronique (16), une alimentation d'énergie solaire (14), dans laquelle l'alimentation d'énergie solaire comprend une source d'énergie solaire (19) qui est connectée à l'électronique (16) de l'appareil, et
ledit circuit d'alimentation (15) comprend une alimentation à découpage (23) connectée entre le réseau de distribution d'énergie (13) et un terminal d'alimentation (24) connecté à l'électronique (16),
**caractérisé en ce que** la source d'énergie solaire est connectée en permanence à l'électronique et en particulier au terminal d'alimentation par l'intermédiaire d'un circuit électrique sans interrupteur, dans une configuration adaptée pour alimenter l'électronique de l'appareil, et **en ce que** l'alimentation à découpage (23) comprend un étage redresseur et, en aval de l'étage redresseur, des moyens de commutation (U1) commandés pour obtenir une tension stabilisée en aval de l'alimentation à découpage.

2. Appareil électrique selon la revendication 1, **caractérisé en ce que** l'alimentation d'énergie solaire (14) est connectée entre la masse et ledit terminal d'alimentation (24) pour l'électronique.

3. Appareil électrique selon l'une ou plusieurs des revendications précédentes, **caractérisé en ce que** ledit circuit d'alimentation (15) comporte au moins deux sorties de tension (24, 25), un stabilisateur linéaire (U2) étant prévu pour réduire la tension d'une première sortie (25) à une seconde sortie (24).

4. Appareil électrique selon l'une ou plusieurs des revendications précédentes, **caractérisé en ce que** l'électronique (16) comprend des moyens d'interface utilisateur (17, 18).

5. Appareil électrique selon l'une ou plusieurs des revendications précédentes, **caractérisé en ce qu'**il comprend un indicateur (22) pour montrer que l'électronique est alimentée par l'alimentation d'énergie solaire (14), ledit indicateur comprenant une LED (22) connectée en série à une diode Zener (21) sur une branche en parallèle avec la source d'énergie solaire (19) de l'alimentation d'énergie solaire (14).

6. Appareil électrique selon l'une ou plusieurs des revendications précédentes, **caractérisé en ce que** l'alimentation d'énergie solaire (14) comprend une diode (20) connectée à un terminal de l'alimentation d'énergie solaire (14) pour empêcher la recirculation de courant dans la source solaire (19) lorsque celle-ci est inactive en raison d'un éclairage insuffisant.

7. Appareil électrique selon l'une ou plusieurs des revendications précédentes, **caractérisé en ce que** le circuit d'alimentation (15) comprend au moins un condensateur (C4, C6) connecté entre la masse et un terminal d'alimentation pour l'électronique.

8. Appareil électrique selon la revendication 1, dans lequel l'alimentation à découpage comprend des moyens de contrôle de retour qui surveillent une tension en aval des moyens de commutation pour la comparer à une tension de référence, pour commander la commutation des moyens de commutation et stabiliser la tension de sortie de l'alimentation.
